Europäisches Patentamt

European Patent Office

Office européen des brevets

(19)

(11) Veröffentlichungsnummer: **0 160 275 B1**

(12) **EUROPÄISCHE PATENTSCHRIFT**

(45) Veröffentlichungstag der Patentschrift: **16.01.91**

(21) Anmeldenummer: **85105076.5**

(22) Anmeldetag: **26.04.85**

(51) Int. Cl.⁵: **F 16 F 9/34, F 16 L 9/08**

(54) **Pneumatische Feder-Dämpfer-Einheit.**

(30) Priorität: **30.04.84 DE 8413300 u**

(43) Veröffentlichungstag der Anmeldung:
**06.11.85 Patentblatt 85/45**

(45) Bekanntmachung des Hinweises auf die
Patenterteilung:
**16.01.91 Patentblatt 91/03**

(84) Benannte Vertragsstaaten:
**DE FR GB IT SE**

(56) Entgegenhaltungen:
**FR-A-1 535 025**
**GB-A- 888 071**
**GB-A-1 137 219**
**US-A-3 312 312**
**US-A-3 954 256**
**US-A-4 335 750**

(73) Patentinhaber: **Gold, Henning, Prof. Dr.-Ing.**
**Im Rheinblick 24**
**D-6530 Bingen 1 (DE)**

(72) Erfinder: **Gold, Henning, Prof. Dr.-Ing.**
**Im Rheinblick 24**
**D-6530 Bingen 1 (DE)**

(74) Vertreter: **Freischem, Werner, Dipl.-Ing.**
**Patentanwälte Dipl.-Ing. W. Freischem Dipl.-Ing.**
**I. Freischem An Gross St. Martin 2**
**D-5000 Köln 1 (DE)**

Courier Press, Leamington Spa, England.

# Beschreibung

Die Erfindung geht aus von einer pneumatischen Feder-Dämpfer-Einheit mit

einem von einer Decke und von einem Boden abgeschlossenen zylindrischen Gehäuse, das mit einem ersten Anschluß versehen ist,

einem in diesem Gehäuse verschiebbar geführten Kolben, der das Gehäuse in einen beim Einfedern größer werdenden Dämpferraum und einen beim Einfedern kleiner werdenden Dämpferraum unterteilt,

einem im Kolben angeordneten, in zwei Richtungen durchströmbaren Drosselorgan,

einer im Kolben starr befestigten und durch den Boden des Gehäuses und durch einen Federraum geführten Kolbenstange, an deren Ende ein zweiter Anschluß angeordnet ist,

einem zwischen dem Gehäuse und einem mit der Kolbenstange verbundenen Teil angeordneten Rollbalg, der den beim Einfedern kleiner werdenden Federraum abdichtet.

Eine pneumatische Feder-Dämpfer-Einheit dieser Art ist bekannt aus der beim Institut für Kraftfahrwesen und Kolbenmaschinen der Rheinisch-Westfälischen Technischen Hochschule Aachen vorliegenden Dissertationsschrift des Anmelders.

Diese Feder-Dämpfer-Einheit federt und dämpft ausschließlich mit Luft. Ihre Mittellage wird durch Nachfüllen oder Ablassen von Luft konstant gehalten. Dabei passen sich ihre Feder- und Dämpfungseigenschaften selbsttätig an die jeweilige Last an, so daß diese Feder-Dämpfer-Einheit insbesondere für Fahrzeuge mit wechselnder Last geeignet ist und einen von der Zuladung unabhängigen Federungskomfort gewährleistet. Diese Feder-Dämpfer-Einheit hat ein frequenz-selektives Dämpfungsverhalten und ermöglicht eine starke Dämpfung einer Resonanzschwingung, ohne bei überkritischer Anregung große Dämpferkräfte zu erzeugen.

Aus der US—A—39 54 256 ist es bekannt, als Drosselorgan eine metallische Ringscheibe zu verwenden. Derartige Ringscheiben verursachen unangenehme Geräusche.

Der Erfindung liegt die Aufgabe zugrunde, diese pneumatische Feder-Dämpfer-Einheit derart weiterzuentwickeln, daß sie sich bei bester Wirksamkeit nur aus wenigen, einfach gestalteten und leichtgewichtigen Teilen zusammensetzt und bei der Federungs- und Dämpfungsarbeit möglichst geringe Geräusche verursacht.

Diese Aufgabe wird erfindungsgemäß dadurch gelöst, daß das Drosselorgan durch zumindest zwei im wesentlichen ebene konzentrisch zur Kolbenachse angeordnete Ringscheiben gebildet ist, die mit Vorspannung zwischen einem am äußeren Rand der einen Ringscheibe anliegenden äußeren Sitz und einem am inneren Rand der anderen Ringscheibe anliegenden inneren Sitz eingesetzt sind, wobei zwischen den Ringscheiben eine schwingungsdämpfende Schicht aus viskoelastischem oder gummielastischem Material angeordnet ist. Die Ringscheiben sind zweckmäßigerweise so angeordnet, daß sie beim Einfedern der Feder-Dämpfer-Einheit vom äußeren Sitz abheben, so daß die Luft aus dem sich komprimierenden Dämpferraum über den äußeren Rand der Ringscheiben in den expandierenden Dämpferraum strömt. Beim Einfedern der Feder-Dämpfer-Einheit heben die Ringscheiben vom inneren Sitz ab, so daß die Luft über den inneren Rand von einem Dämpferraum in den anderen strömt. Die Ringscheiben bestehen aus Stahlblech und sind bei einem Außendurchmesser von beispielsweise 50 mm etwa 0,3 mm dick. Damit diese Ringscheiben bei der Dämpfungsarbeit nicht in hörbare Schwingungen geraten und einen Pfeifton produzieren, ist zwischen den Ringscheiben eine Schicht aus viskoelastischem oder gummielastischem Material angeordnet. Die beiden Ringscheiben können aufeinandervulkanisiert sein oder miteinander verklebt sein. Besonders vorteilhaft ist zwischen den beiden Ringscheiben eine dünne Fettschicht, insbesondere ein mineralisches Langzeitfett, vorgesehen. Dieses verhindert dauerhaft, daß die mit Vorspannung aufeinanderliegenden Ringscheiben bei der Dämpfungsarbeit in hörbare Schwingungen geraten. Derartige Langzeitfette sind beispielsweise zur Dauerschmierung von Kugellagern bekannt und handelsüblich.

Die erfindungsgemäße Ausbildung des Drosselorgans hat den Vorteil, daß die Dämpfungscharakteristik und auch die Federcharakteristik der Feder-Dämpfer-Einheit mit einfachen und billigen Mitteln verändert werden kann, indem mehrere mehr oder weniger dicke Ringscheiben in den Kolben eingesetzt werden. Die Vorspannung der Ringscheiben kann durch die räumliche Anordnung der beiden Sitze zueinander bestimmt werden. Der innere Sitz und der äußere Sitz können aber auch in herstellungstechnisch einfacher Weise in einer Ebene liegen, so daß die Vorspannung der eingesetzten Ringscheiben von der Dicke dieser Ringscheiben sowie gegebenenfalls von deren tellerfederförmigen Gestaltung abhängig ist.

Der Kolben setzt sich vorteilhafterweise aus zwei geprägten und gestanzten Stahlblechteilen zusammen, die in einer in Höhe des äußeren Sitzes befindlichen Ebene aufeinanderliegend miteinander verbunden, insbesondere verschweißt sind. Der so gebildete Kolben hat radiale Flansche, zwischen denen ein einstückiger Kolbenring elastisch gehalten ist. Dieser, die beiden Dämpferräume gegeneinander abdichtende Kolbenring wird also nur durch die zylindrische Gehäusewand geführt und zentriert. Diese Ausbildung des Kolbens hat den Vorteil, daß sowohl der Kolben als auch das Drosselorgan im Kolben aus einfach gestalteten, hoch belastbaren, leichtgewichtigen Teilen zusammengesetzt ist. Im Kolben befindet sich eine rohrförmige Nabe, in die die Kolbenstange eingesetzt und befestigt ist. Das innere Ende dieser Nabe bildet den inneren Sitz für die Ringscheibe bzw. das Ringscheibenpaket.

In der folgenden Beschreibung wird ein Ausführungsbeispiel der erfindungsgemäßen pneumatischen Feder-Dämpfer-Einheit unter Bezugnahme auf die Zeichnungen näher erläutert. Die Zeichnungen zeigen in

Fig. 1 eine Längsschnittansicht einer Feder-Dämpfer-Einheit nach der Erfindung,

Fig. 2 eine vergrößerte Teilansicht des Kolbens.

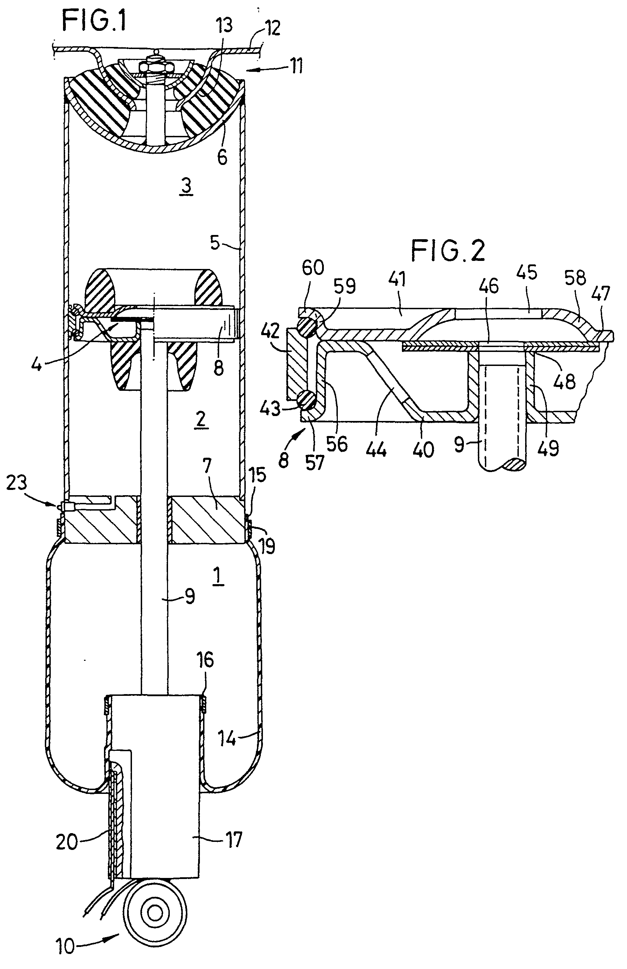

Die aus Fig. 1 ersichtliche Gas-Feder-Dämpfer-Einheit weist einen Federraum 1 und zwei Drosselräume 2 und 3 auf. Beim Einfedern verringert sich das Volumen des Federraumes 1 und des Dämpferraumes 3, während das Volumen des Dämpferraumes 2 sich beim Einfedern vergrößert und beim Ausfedern verkleinert. Der Federraum 1 ist innerhalb eines Federbalges 14 untergebracht, während die Dämpferräume 2 und 3 in einem zylindrischen Gehäuse 5 untergebracht und durch einen im Gehäuse 5 verschiebbaren Kolben 8 voneinander getrennt sind. Das Gehäuse 5 ist an einem Ende durch eine Decke 6 und am anderen Ende durch einen Boden 7 abgeschlossen. Der Boden 7 trennt den Federraum 1 vom Dämpferraum 2. Im Kolben 8 ist ein Drosselorgan 4 angeordnet, über das der Dämpferraum 2 mit dem Dämpferraum 3 in Verbindung steht. Der Kolben 8 weist eine Kolbenstange 9 auf, die sich durch den Dämpferraum 2, den Boden 7 des Gehäuses 5 und den Federraum 1 erstreckt und dessen Ende in eine Abwälzhülse 17 für den Federbalg 14 übergeht. Am äußeren Ende der Abwälzhülse 17 ist ein Anlenkpunkt 10 der Gas-Feder-Dämpfer-Einheit angeordnet, während der andere Anlenkpunkt 11 der Feder-Dämpfer-Einheit sich im Bereich der Decke 6 des Gehäuses 5 befindet.

Die Feder-Dämpfer-Einheit ist beispielsweise mit ihrem oberen Anlenkpunkt 10 an einem Teil 13 der Karosserie 12 und mit ihrem unteren Anlenkpunkt 11 an einer Radachse angelenkt.

Im Boden 7 kann ein von außen zuschaltbares Drosselorgan angeordnet sein, das den Federraum 1 mit dem Dämpferraum 2 verbindet, mit der Wirkung, daß die Federcharakteristik und die Dämpfercharakteristik verändert werden. Ferner kann der Dämpferraum 3 über eine hohle Kolbenstange 9 und die Abwälzhülse 17 mit dem Federraum 1 verbunden sein. Diese Verbindung kann gedrosselt oder ungedrosselt sein und von außen zuschaltbar sein.

Der Federbalg 14 ist mit seinem im Durchmesser größeren Ende 15 mittels eines Spannbandes 19 am Umfang des Bodens 7 des Gehäuses 5 befestigt, während das im Durchmesser kleinere Ende 16 am oberen Ende der Abwälzhülse 17 befestigt ist. Beim Einfedern wälzt sich der Federbalg 14 auf dieser Abwälzhülse 17 ab.

Auf der Abwälzhülse 17 ist ein Niveau-Schalter 20 angebracht, der dafür sorgt, daß der Gasdruck in der Feder-Dämpfer-Einheit der abzufedernden Last angepaßt ist.

Über eine von einer Pumpe oder einem Druckspeicher kommende Gas- oder Luftzuführung 23, die am Boden 7 des Gehäuses 5 angeschlossen ist und die in den Dämpferraum 2 einmündet, kann der Druck in der Feder-Dämpfer-Einheit verändert werden.

Bei der erfindungsgemäßen Feder-Dämpfer-Einheit, die stets mit einer Federkraft vorgespannt eingebaut ist, sind die Federkräfte und die Dämpferkräfte nicht voneinander trennbar. Um eine gute Schallisolierung zwischen der Feder-Dämpfer-Einheit und der abzufedernden Masse zu erreichen, ist der Anlenkpunkt 11 als weiches, großflächiges Polster ausgebildet.

Wie insbesondere die Fig. 2 zeigt, ist der Kolben 8 aus zwei Stanzblechteilen, nämlich dem unteren Kolbenteil 40 und dem oberen Kolbenteil 41 sowie aus einem Kolbenring 42, der von elastischen Ringen 43 gehalten wird, zusammengesetzt. Die beiden Kolbenteile 40, 41 sind in der Nähe ihres Umfanges auf einer Ringfläche 61 miteinander verschweißt, verlötet oder vernietet. Der untere Kolbenteil 40 weist in seiner Mitte eine nach oben herausgedrückte Nabe 49 auf, in welcher das obere Ende der Kolbenstange 9 eingeschweißt oder eingelötet ist. Ferner weist der untere Kolbenteil 40 eine schrägverlaufende Wand 62 auf, in der Öffnungen 44 angeordnet sind. Am Umfang weist der untere Kolbenteil 40 eine im wesentlichen axial verlaufende Wand 56 und einen unteren radialen Flansch 57 auf. Das obere Kolbenteil 41 weist in seinem mittleren Bereich eine nach oben gerichtete Auswölbung 58 auf mit einer zentralen Öffnung 45. Auch der obere Kolbenteil 41 weist an seinem Umfang eine im wesentlichen axial verlaufende Wand 59 und an deren oberem Ende einen oberen radialen Flansch 60 auf. Zwischen den beiden Kolbenteilen 40, 41 ist das Drosselorgan 4 angeordnet.

Das Drosselorgan 4 besteht aus zwei Einbaulage ebenen Ringscheiben 46 aus Stahlblech. Diese Ringscheiben 46 sind derart im Kolben 8 angeordnet und abgestützt, daß sie je nach Strömungsrichtung innen oder außen umströmt werden. Zwischen den Ringscheiben 46 ist eine Schicht aus viskoelastischem Material, insbesondere Langzeitfett, angeordnet. Diese Schicht bewirkt, daß während des Drosselvorganges die Ringscheiben 46 nicht in Schwingungen gebracht werden. Die Ringscheiben 46 aus Stahlblech haben einen Außendurchmesser von 30 bis 60 mm, einen Innendurchmesser von 20 bis 30 mm und sie haben eine Blechstärke von 0,1 bis 0,2 mm. Die untere Ringscheibe 46 liegt mit ihrem Innenrand auf dem durch das obere Ende gebildeten Sitz 48 der Nabe 49 auf, während die obere Ringscheibe 46 mit ihrem Außenrand jenseits der Auswölbung 39 an einem ringförmigen Sitz 47 anliegt, der von der Unterseite des oberen Kolbenteils 40 gebildet wird. Damit beim Einfedern der Feder-Dämpfer-Einheit kleinere Dämpferkräfte erzielt werden als beim Ausfedern, ist die Anordnung des Drosselorgans beim Ausführungsbeispiel so, daß beim Einfedern die Luft aus dem Dämpferraum 3 durch die Öffnung 45 und unter Abheben des Außenrandes der Ringscheibe 46 vom Sitz 47 über die Außenkante der Ringscheibe 46 in den Dämpferraum 2 strömt, während beim Ausfedern die Luft aus dem Dämpferraum 2 durch die Öffnungen 44 unter Abheben des Innenrandes der Ringscheibe 46 vom Sitz 48 über die Innenkante der Ringscheiben 46 in den Dämpferraum 3 strömt.

Wie aus Fig. 2 ersichtlich ist, sind bei diesem Ausführungsbeispiel die mit Vorspannung eingesetzten Ringscheiben 46 eben. Zur Erzielung der Vorspannung ist der innere, untere Sitz 48 gegenüber dem in der Trennebene der beiden Kolbenteile 40, 41 befindlichen äußeren und oberen Sitz 47 um etwas weniger als die Blechstärke der Ringscheiben 46 versetzt. Die Vorspannung der Ringscheiben 46 kann durch Änderung des Abstandes der Sitze 47, 48 von einander eingestellt werden. Anstelle von einer oder zwei Ringscheiben 46 können gegebenenfalls auch noch mehr Ringscheiben zur Abstimmung der Dämpfungscharakteristik verwendet werden.

Die Ringscheiben können auch tellerförmig bzw. kegelförmig ausgebildet sein. Eine derartige tellerförmige Ausbildung der Ringscheiben bewirkt, daß ihre Federkennlinie stärker nicht linear ist als die der ebenen Ringscheiben. Wegen der stärkeren Degressivität oder Progressivität ihrer Federkennlinie wird das frequenzabhängige Dämpfungsverhalten der Feder-Dämpfer-Einheit stärker beeinflußt. Bei dieser tellerfederförmigen Ausbildung der Ringscheiben ist der Winkel zwischen dem Kegelmantel und der Basis kleiner als 20°.

Der Kolbenring 42 wird von den sich auf den Flanschen 57, 60 und den axialen Wänden 56, 59 des Kolbens 8 sich abstützenden, etwas vorgespannten elastischen Ringen 43 gehalten. Der Kolbenring 42 ist einstückig und wird von der zylindrischen Innenwand des Gehäuses 5 zentriert. Zur besseren Temperaturdehnungskompensation kann der Kolbenring 42 geschlitzt sein, und zwar derart, daß sich der Schlitz zunächst nur bis zur halben Kolbenringdicke erstreckt und nach einem Versatz um den halben Kolbenringumfang weitergeführt ist. Die im Betrieb auftretenden elastischen Verformungen der einzelnen Bauteile der Feder-Dämpfer-Einheit haben bei dieser Ausführungsform keinen ungünstigen Einfluß auf die Dichtfunktion des Kolbens 8.

## Patentansprüche

1. Pneumatische Feder-Dämpfer-Einheit mit einem von einer Decke (6) und von einem Boden (7) abgeschlossenen zylindrischen Gehäuse (5), das mit einem ersten Anschluß (11) versehen ist, einem in diesem Gehäuse (5) verschiebbar geführten Kolben (8), der das Gehäuse (5) in einen beim Einfedern größer werdenden Dämpferraum (2) und einen beim Einfedern kleiner werdenden Dämpferraum (3) unterteilt, einem im Kolben (8) angeordneten, in zwei Richtungen durchströmbaren Drosselorgan (4), einer im Kolben (8) starr befestigten und durch den Boden (7) des Gehäuses (5) und durch einen Federraum (1) geführten Kolbenstange (9), an deren Ende ein zweiter Anschluß (10) angeordnet ist, einem zwischen dem Gehäuse (5) und einem mit der Kolbenstange (9) verbundenen Teil angeordneten Rollbalg (14), der den beim Einfedern kleiner werdenden Federraum (1) abdichtet, dadurch gekennzeichnet, daß das Drosselorgan (4) durch zumindest zwei im wesentlichen ebene konzentrisch zur Kolbenachse angeordnete Ringscheiben (46) gebildet ist, die mit Vorspannung zwischen einem am äußeren Rand der einen Ringscheibe (46) anliegenden äußeren Sitz (47) und einem am inneren Rand der anderen Ringscheibe (46) anliegenden inneren Sitz (48) eingesetzt sind, wobei zwischen den Ringscheiben (46) eine schwingungsdämpfende Schicht aus viskoelastischem oder gummielastischem Material angeordnet ist.

2. Feder-Dämpfer-Einheit nach Anspruch 1, dadurch gekennzeichnet, daß zwischen den Ringscheiben (46) Fett, insbesondere ein mineralisches Langzeitfett vorgesehen ist.

3. Feder-Dämpfer-Einheit nach den Ansprüchen 1 und 2, dadurch gekennzeichnet, daß die Ringscheiben (46) aus 0,1 bis 0,2 mm dickem Stahlblech bestehen und einen Außendurchmesser von 30 bis 60 mm und einen Innendurchmesser von 20 bis 30 mm aufweisen.

4. Feder-Dämpfer-Einheit nach einem der Ansprüche 1 bis 3, dadurch gekennzeichnet, daß der Kolben (8) aus einem unteren Kolbenteil (40) mit dem inneren Sitz (48) und einem oberen Kolbenteil (41) mit dem äußeren Sitz (47) zusammengesetzt ist.

5. Feder-Dämpfer-Einheit nach Anspruch 4, dadurch gekennzeichnet, daß der untere Kolbenteil (40) zur Aufnahme und Befestigung der Kolbenstange (9) eine rohrartige Nabe (49) aufweist, deren oberes Ende den inneren Sitz (48) bildet.

6. Feder-Dämpfer-Einheit nach Anspruch 4 oder 5, dadurch gekennzeichnet, daß der obere Kolbenteil (41), vom äußeren Sitz (47) ausgehend, eine zentrale Auswölbung (58) mit einer Öffnung (45) aufweist.

7. Feder-Dämpfer-Einheit nach einem der Ansprüche 4 bis 6, dadurch gekennzeichnet, daß die Kolbenteil (40, 41) geprägte und gestanzte Stahlblechteile sind, die in einer in Höhe des äußeren Sitzes (47) befindlichen Ebene (61) aufeinanderliegend miteinander verbunden sind.

8. Feder-Dämpfer-Einheit nach einem der Ansprüche 4 bis 7, dadurch gekennzeichnet, daß der Kolben (8) zwischen einem unteren radialen Flansch (57) und einem oberen radialen Flansch (60) einen elastisch gehaltenen, einstückigen Kolbenring (42) trägt.

## Revendications

1. Une unité à amortisseur et ressort pneumatiques, avec un boîtier cylindrique (5) fermé par un couvercle (6) et un fond (7) et pourvu d'une première connexion (11), un piston (8) guidé coulissant dans ce boîtier, séparant ledit boîtier (5) en une chambre d'amortissement (2) qui devient plus grande en compression et une chambre d'amortissement (3) qui devient plus petite en compression, un organe étrangleur (4) agencé dans le piston (8) et susceptible d'être traversé dans les deux directions, une tige de piston (9) fixée rigidement à l'intérieur du piston (8) et guidée à travers le fond (7) u boîtier (5) et une chambre d'élasticité (1) à l'extrémité de laquelle est agencée une deuxième connexion (10), un soufflet roulant (14) disposé entre le boîtier (5) et une pièce reliée à la tige de piston (9) et qui étanche la chambre d'élasticité (1) qui devient plus petite en compression, caractérisée en ce que l'organe étrangleur (4) est formé d'au moins deux disques (46) essentiellement plans et concentriques avec l'axe du piston, qui sont montés sous prétension entre un siège externe (47) en contact avec le bord externe de l'un des disques (46) et un siège interne (48) en contact avec le bord interne de l'autre disque (46), une couche antivibratile de matériau viscoélastique ou en caoutchouc souple étant disposée entre les disques (46).

2. Unité à amortisseur et ressort pneumatiques selon la revendication 1, caractérisée en ce que les disques (46) sont séparées par une couche de graisse, en particulier une couche de graisse minérale longue durée.

3. Unité à amortisseur et ressort pneumatiques selon les revendications 1 et 2, caractérisée en ce que les disques (46) se composent d'une tôle d'acier de 0,1 à 0,2 mm d'épaiseur et présentent un diamètre externe compris entre 30 et 60 mm et un diamètre interne compris entre 20 et 30 mm.

4. Unité à amortisseur et ressort pneumatiques selon l'une des revendications 1 à 3, caractérisée en ce que le piston (8) se compose d'une partie de piston inférieure (40) comprenant le siège interne (48) et d'une partie de piston supérieure (41) comprenant le siège externe (47).

5. Unité à amortisseur et ressort pneumatiques selon la revendication 4, caractérisée en ce que la partie de piston inférieure (40) présente, pour recevoir et fixer la tige de piston (9), un moyeu tubulaire (49) dont l'extrémité supérieure forme le siège interne (48).

6. Unité à amortisseur et ressort pneumatiques selon la revendication 4 ou 5, caractérisée en ce que la partie de piston supérieure (41) présente un galbe (58) central, qui part du siège externe (47), ainsi qu'une ouverture (45).

7. Unité à amortisseur et ressort pneumatiques selon l'une des revendications 4 à 6, caractérisée en ce que les parties de piston (40, 41) sont des pièces en tôle d'acier matricées ou découpées, qui sont assemblées l'une sur l'autre, dans un plan (61) qui se trouve au niveau du siège externe (47).

8. Unité à amortisseur et ressort pneumatiques selon l'une des revendications 4 à 7, caractérisée en ce que le piston (8) porte un segment de piston (42) monobloc supporté de manière élastique entre un flasque radial inférieur (57) et un flasque radial supérieur (60).

**Claims**

1. A pneumatic spring-damper unit comprising a cylindrical housing (5) which is closed off by a top (6) and a bottom (7) and which is provided with a first connection (11), a piston (8) which is slidably guided in said housing (5) and which subdivides the housing (5) into a damper chamber (2) which increases in size in the compression stroke and a damper chamber (3) which decreases in size in the compression stroke, a throttle member (4) which is arranged in the piston (8) and through which flow can pass in two directions, a piston rod (9) which is rigidly fixed to the piston (8) and which is guided through the bottom (7) of the housing (5) and through a spring chamber (1) and at the end of which is arranged a second connection (10), and a rolling bellows (14) which is arranged between the housing (5) and a member connected to the piston rod (9) and which seals off the spring chamber (1) which decreases in size in the compression stroke, characterised in that the throttle member (4) is formed by at least two substantially flat annular discs (46) which are arranged coaxially with respect to the axis of the piston and which are inserted in a prestressed condition between an outer seat (47) which bears against the outer edge of the one annular disc (46) and an inner seat (48) which bears against the inner edge of the other annular disc (46), wherein an oscillation-damping layer of visco-elastic or rubber-elastic material is arranged between the annular discs (46).

2. A spring-damper unit according to claim 1 characterised in that grease, in particular a mineral long-life grease, is provided between the annular discs (46).

3. A spring-damper unit according to claims 1 and 2 characterised in that the annular discs (46) comprise steel plate which is from 0.1 to 0.2 mm in thickness and are of an outside diameter of from 30 to 60 mm and an inside diameter of from 20 to 30 mm.

4. A spring-damper unit according to one of claims 1 to 3 characterised in that the piston (8) is composed of a lower piston portion (40) with the inner seat (48) and an upper piston portion (41) with the outer seat (47).

5. A spring-damper unit according to claim 4 characterised in that the lower piston portion (40), for receiving and fixing the piston rod (9), has a tubular boss (49), the upper end of which forms the inner seat (48).

6. A spring-damper unit according to claim 4 or claim 5 characterised in that, starting from the outer seat (47), the upper piston portion (41) has a central bulge portion (58) with an opening (45).

7. A spring-damper unit according to one of claims 4 to 6 characterised in that the piston portions (40, 41) are pressed and stamped steel plate portions which are connected together in superposed relationship in a plane (61) at the level of the outer seat (47).

8. A spring-damper unit according to one of claims 4 to 7 characterised in that the piston (8) carries an elastically held, one-piece piston ring (42) between a lower radial flange (57) and an upper radial flange (60).

FIG.1

FIG.2